(19) Europäisches Patentamt

European Patent Office

Office européen des brevets

(11) **EP 2 333 458 A1**

(12) **EUROPEAN PATENT APPLICATION**

(43) Date of publication:
**15.06.2011 Bulletin 2011/24**

(21) Application number: **10193399.2**

(22) Date of filing: **02.12.2010**

(51) Int Cl.:
*F25B 31/00* (2006.01)     *F25B 41/04* (2006.01)
*F25B 1/00* (2006.01)     *F25B 5/02* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **03.12.2009 JP 2009275947**

(71) Applicant: **Samsung Electronics Co., Ltd.
Suwon-si, Gyeonggi-do 506-762 (KR)**

(72) Inventor: **Takeichi, Hisashi
Osakabu (JP)**

(74) Representative: **Grünecker, Kinkeldey,
Stockmair & Schwanhäusser
Anwaltssozietät
Leopoldstrasse 4
80802 München (DE)**

(54) **Fluid circuit and refrigeration cycle apparatus using the same**

(57)     Disclosed herein is a fluid circuit in which a compressible fluid and an incompressible fluid flow in a mixed state including an upstream side space and a downstream side space in which internal pressures repeatedly alternate between high pressure and low pressure, and a pump unit having an inlet connected to the upstream side space and an outlet connected to the downstream side space. The pump unit has two check valves arranged in series in a direction in which fluid movement is allowed from the upstream side space to the downstream side space, and a middle part, having a predetermined capacity, formed between the check valves.

FIG. 1

**Description**

**BACKGROUND**

1. Field

Embodiments relate to a structure to convey a compressible fluid along a fluid circuit in which the compressible fluid and an incompressible fluid flow in a mixed state.

2. Description of the Related Art

A refrigeration cycle apparatus, such as an air conditioning apparatus installed in buildings, includes a plurality of compressors. At least one of the compressors is a variable capacity type compressor, and the other compressors are fixed capacity type compressors. Each of the compressors has a lubricant storage part to store a lubricant to prevent moving parts from overheating. When each of the compressors discharges a refrigerant, the lubricant is discharged to a discharge pipe together with the refrigerant, with the result that the lubricant is unevenly distributed to the compressors.
To prevent uneven distribution of the lubricant, a uniform lubricant distribution pipe to perform uniform lubricant distribution is mounted at each compressor such that a lubricant is conveyed from a compressor having surplus lubricant to another compressor having insufficient lubricant. To convey the lubricant, all compressors may be operated simultaneously to perform a uniform lubricant distribution operation, and a pressure difference may occur from upstream to downstream in the direction to convey the lubricant (see Japanese Patent Publication No. 2006-46783).
In the refrigeration cycle apparatus in which the variable capacity type compressor and the fixed capacity type compressors are mounted in parallel, however, power is low during a normal air conditioning operation. In other words, when a temperature difference between set temperature and ambient temperature is small, the fixed capacity type compressors are stopped. In this case, it may not be possible to generate a pressure difference necessary to convey lubricant in the stopped compressors, with the result that conveyance of the lubricant is not achieved. For this reason, during a uniform lubricant distribution operation, the fixed capacity type compressors are operated. Therefore, an operation different from the air conditioning operation is performed by all compressors, thereby reducing energy efficiency and refrigeration efficiency.
In summary, in a conventional refrigeration cycle apparatus in which an incompressible fluid, such as a lubricant, and a compressible fluid, such as a refrigerant, flow in a mixed state, power necessary to enable the lubricant to flow and to perform uniform lubricant distribution is acquired by operating all the compressors, with the result that performance, such as refrigeration efficiency, of the refrigeration cycle apparatus is lowered.

**SUMMARY**

Therefore, it is an aspect of at least one embodiment to provide a fluid circuit in which a compressible fluid and an incompressible fluid flow in a mixed state and which conveys the incompressible fluid, such as a lubricant, for example, without operating stopped compressors using a completely different construction from the conventional art and a refrigeration cycle apparatus using the same which achieves uniform lubricant distribution between compressors without performing a separate uniform lubricant distribution operation.
Additional aspects will be set forth in part in the description which follows and, in part, will be obvious from the description, or may be learned by practice of the invention.
The foregoing and/or other aspects are achieved by providing a fluid circuit in which a compressible fluid and an incompressible fluid flow in a mixed state includes an upstream side space and a downstream side space in which internal pressures repeatedly alternate between high pressure and low pressure and a pump unit having an inlet connected to the upstream side space and an outlet connected to the downstream side space, wherein the pump unit has two check valves arranged in series in a direction in which fluid movement is allowed from the upstream side space to the downstream side space and a middle part, having a predetermined capacity, formed between the check valves.
According to this construction, the internal pressures of the upstream side space and a downstream side space repeatedly alternate between high pressure and low pressure, and the internal pressure of the space formed by the two check valves, i.e., the middle part, is repeatedly raised and lowered. At this time, the volume of the compressible fluid in the middle part repeatedly contracts and expands according to the raising and lowering of the internal pressure of the middle part. In consideration of the volume change of the middle part, the incompressible fluid is operated as follows. When the pressure of the middle part is raised, and therefore, the compressible fluid in the middle part contracts, an amount of the incompressible fluid corresponding to the empty volume introduced from the upstream side space to the middle part since the capacity of the middle part is fixed. Subsequently, when the internal pressure of the middle part is lowered, and therefore, the compressible fluid expands, the incompressible fluid in the middle part is pushed outward.

As a result, the incompressible fluid is conveyed from the middle part to the downstream side space through downstream sides of the two check valves.

As described above, a pumping action is performed by providing a structure, for example, in which, pressure change occurs between high pressure and low pressure in a certain pipe, two check valves are mounted on this pipe, and a middle part having a predetermined capacity is formed between the two check valves. Consequently, conveyance of the incompressible fluid is achieved through the above-described simple structure without using additional power.

That is, when the pressures of the upstream side space and the downstream side space repeatedly alternate between high pressure and low pressure, the incompressible fluid may be conveyed from the upstream side space to the middle part and from the middle part to the downstream side space by the pumping action even though the compressor does not perform an operation to maintain the upstream side at high pressure and the downstream side at low pressure.

For the pump unit to perform the pumping action with high efficiency, the middle part may have a capacity (Vs) set to be within a range as represented by the following inequality.

[Equation 1]

$$\begin{cases} V_s \geq (N_a \times T_c)/(1 - \rho_l / \rho_h) \\ V_s \leq (\int_0^{T_l} C_l \times \sqrt{p}\,dp)/(1 - \rho_l / \rho_h) \end{cases}$$

Where, ph is a density of the compressible fluid at high pressure, ρl is a density of the compressible fluid at low pressure, Tc is a cycle in which change between high pressure and low pressure occurs, Na is a volume flow rate of the incompressible fluid, p is pressure loss, Cl is an integer, Tl is time taken until pressure of the pump unit equals to pressure of the upstream side space.

The middle part may be provided at the bottom thereof with a fluid outlet hole such that pressure change occurs between high pressure and low pressure in the middle part to achieve easy conveyance of the compressible fluid.

The foregoing and/or other aspects are achieved by providing a refrigeration cycle apparatus, including a plurality of compressors; and a uniform lubricant distribution mechanism to perform uniform lubricant distribution between the respective compressors, the uniform lubricant distribution mechanism having at least one fluid circuit including an upstream side space and a downstream side space in which internal pressures repeatedly alternate between high pressure and low pressure, and a pump unit having an inlet connected to the upstream side space and an outlet connected to the downstream side space, the pump unit including two check valves arranged in series in a direction in which fluid movement is allowed from the upstream side space to the downstream side space, and a middle part, having a predetermined capacity, formed between the check valves.

The uniform lubricant distribution mechanism may have a uniform lubricant distribution pipe to interconnect lubricant storage parts of the respective compressors to store a lubricant, the at least one fluid circuit being formed at the uniform lubricant distribution pipe, and at least one of the compressors may include a variable capacity type compressor in which internal pressures of the upstream side space and the downstream side space are changed between high pressure and low pressure based on a change in a discharge capacity of the compressor.

The compressors may be variable capacity low-pressure shell type compressors, the uniform lubricant distribution mechanism may have a uniform lubricant distribution pipe connected between each of the lubricant storage parts of the compressors and each of suction pipes connected to the compressors to suction a lubricant, and the at least one fluid circuit may be mounted on the uniform lubricant distribution pipe.

An upstream side of the fluid circuit may be connected to a lubricant outlet port of the compressor, and a downstream side of the fluid circuit may be connected to the suction pipe extending to the compressor.

The compressors may be variable capacity high-pressure shell type compressors, the uniform lubricant distribution mechanism may have a uniform lubricant distribution pipe connected between each of the lubricant storage parts of the compressors and each of discharge pipes connected to the compressors to discharge a lubricant, and the at least one fluid circuit may be mounted on the uniform lubricant distribution pipe.

An upstream side of the fluid circuit may be connected to a lubricant output port of the compressor, and a downstream side of the fluid circuit may be connected to the discharge pipe extending from the compressor.

At least one of the plurality of compressors may be an inverter type compressor, the uniform lubricant distribution mechanism may have a discharge pipe connected to the inverter type compressor to discharge a lubricant, a suction pipe to suction the lubricant, a bypass pipe connected between the discharge pipe and the suction pipe, and a valve mounted on the bypass pipe to allow refrigerant gas from the discharge pipe to be bypassed to the suction pipe to perform a pseudo-unload operation.

The refrigeration cycle may further include discharge pipes to discharge a lubricant from the plurality of compressors, a lubricant separator connected to the discharge pipes to separate a lubricant from a refrigerant discharged from the plurality of compressors, and a lubricant return pipe mounted between the lubricant separator and a suction pipe to suction lubricant of one of the compressors to return the lubricant to the one of the compressors.

Each of the plurality of compressors may include a lubricant storage part, the uniform lubricant distribution mechanism may have a plurality of uniform lubricant distribution pipes connecting each of the lubricant storage parts of the compressors to each other such that the compressors form a circular ring, and fluid circuits may be mounted between respective compressors to convey surplus lubricant between the compressors.

BRIEF DESCRIPTION OF THE DRAWINGS

These and/or other aspects will become apparent and more readily appreciated from the following description of the embodiments, taken in conjunction with the accompanying drawings of which:

FIG. 1 is a view illustrating the construction of a refrigeration cycle apparatus according to at least one embodiment;
FIG. 2 is a view illustrating the construction of a fluid circuit in the refrigeration cycle apparatus of FIG. 1;
FIG. 3 is a view illustrating the operation of the fluid circuit in the refrigeration cycle apparatus of FIG. 1;
FIG. 4 is a timing chart illustrating the operation of the fluid circuit in the refrigeration cycle apparatus of FIG. 1;
FIG. 5 is a view illustrating the construction of a refrigeration cycle apparatus according to at least one embodiment;
FIG. 6 is a timing chart illustrating the operation of a fluid circuit in the refrigeration cycle apparatus of FIG. 5;
FIG. 7 is a view illustrating the construction of a uniform lubricant distribution mechanism in a modification of the refrigeration cycle apparatus of FIG. 5;
FIG. 8 is a view illustrating the construction of a fluid circuit in the modification of the refrigeration cycle apparatus of FIG. 5;
FIG. 9 is a view illustrating the construction of a general air conditioning apparatus;
FIG. 10 is a view illustrating the construction of a refrigeration cycle apparatus according to at least one embodiment in the vicinity of a compressor;
FIG. 11 is a view illustrating the construction of a modification of the refrigeration cycle apparatus of FIG. 10 in the vicinity of a compressor;
FIG. 12 is a view illustrating the construction of a refrigeration cycle apparatus according to at least one embodiment in the vicinity of a compressor; and
FIG. 13 is a timing chart illustrating the operation of a fluid circuit in the refrigeration cycle apparatus of FIG. 12.

DETAILED DESCRIPTION

Reference will now be made in detail to the at least one embodiment, examples of which are illustrated in the accompanying drawings, wherein like reference numerals refer to like elements throughout.

First, a fluid circuit 100 and a refrigeration cycle apparatus 200 using the same according to at least one embodiment will be described. In this embodiment, the refrigeration cycle apparatus 200 is an air conditioning apparatus.

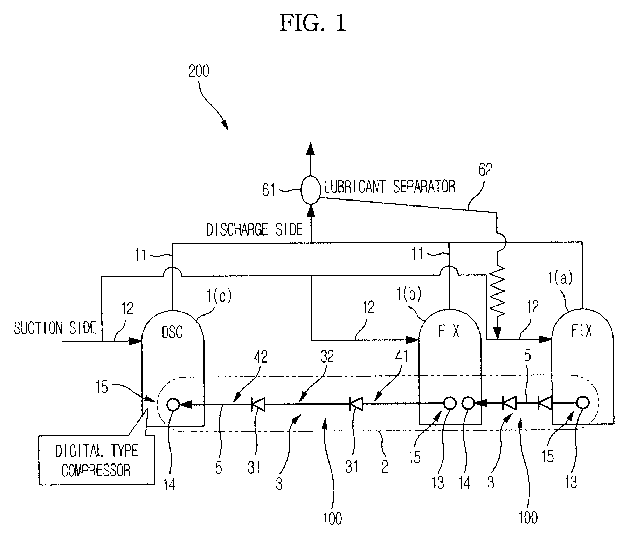

FIG. 1 is a view illustrating the construction of a refrigeration cycle apparatus according to at least one embodiment.

Referring to FIG. 1, the refrigeration cycle apparatus 200 includes a plurality of compressors 1 arranged in parallel and a uniform lubricant distribution mechanism 2 to perform uniform lubricant distribution between the respective compressors 1(a), 1(b) and 1(c). A condenser (not shown), an expansion valve (not shown), and an evaporator (not shown) are sequentially mounted at the rear of a connection where discharge pipes 11 of the compressors 1 join one another. A refrigerant, passing through the evaporator, returns to the respective compressors 1 along a suction pipe 12, thereby constituting a refrigeration cycle. Also, a lubricant separator 61 to separate a lubricant from the refrigerant discharged from the compressors 1 is mounted between the connection of the discharge pipes 11 and the condenser. A lubricant return pipe 62 to return the lubricant is mounted between the lubricant separator 61 and the suction pipe 12. Specifically, the downstream side of the lubricant return pipe 62 is connected to a branch of the suction pipe 12 such that the lubricant returns to only one of the compressors 1(a). The suction pipe 12 to which the lubricant return pipe 62 is connected is inclined downward toward the compressor 1(a). Even when the connected compressor 1(a) is stopped, therefore, the lubricant flows from the lubricant separator 61 to the compressor 1 (a).

One of the compressors 1 is a variable capacity low-pressure shell type compressor 1, which is a digital type compressor. In this compressor 1, switching between a load operation in which suctioning and compressing actions are performed and an unload operation in which the compressor 1 idles and thus suctioning and compressing actions are not performed is achieved. Therefore, an amount of a refrigerant discharged may be variously adjusted based on a ratio of the duration of the load operation to the duration of the unload operation per cycle. This compressor 1 is a variable capacity type compressor 1. Also, in the low-pressure shell type compressor 1, a lubricant storage part 15 to store a lubricant has a lower internal pressure than a cylinder in which suctioning and compressing actions are performed.

The other compressors 1 are fixed capacity type compressors 1, which discharge only a single amount of a refrigerant.

The uniform lubricant distribution mechanism 2 has uniform lubricant distribution pipes 5 to interconnect lubricant storage parts of the respective compressors 1. As shown in FIG. 1, the uniform lubricant distribution pipes 5 are mounted to connect the respective compressors 1 in series. The upstream side of each uniform lubricant distribution pipe 5 is connected to a lubricant outlet port 13 of a corresponding one of the compressors 1 mounted at a standard lubricant amount height, and the downstream side of each uniform lubricant distribution pipe 5 is connected to a lubricant inlet port 14 of a corresponding one of the compressors 1. When a certain compressor 1 contains surplus lubricant, therefore, the lubricant flows to a neighboring compressor 1. At each of the uniform lubricant distribution pipes 5 mounted between the respective compressors 1 is formed a fluid circuit 100 in which pressures at the upstream side and the downstream side of each uniform lubricant distribution pipe 5 repeatedly alternate between high pressure and low pressure to perform a pumping action, thereby conveying the surplus lubricant to a neighboring compressor 1. The fluid circuits 100 are arranged in line such that a fluid is conveyed in the same direction.

How to convey a lubricant using the uniform lubricant distribution mechanism 2 will be described. In the following description, it is assumed that a fixed capacity type compressor 1 located at the right side of FIG. 1, the suction pipe 12 of which is connected to the downstream side of the lubricant return pipe 62, is a start compressor 1a, a variable capacity type compressor 1 located at the left side of FIG. 1 is an end compressor 1c, and a fixed capacity type compressor 1 between the start compressor 1 a and the end compressor 1 c is a middle compressor 1 b.

When a certain compressor 1 contains a surplus lubricant, the lubricant is separated by the lubricant separator 61 and is circulated through the start compressor 1 a, the middle compressor 1 b, the end compressor 1c, the discharge pipe 11 of the end compressor 1c, and the lubricant separator 61, thereby achieving uniform lubricant distribution between the respective compressors 1.

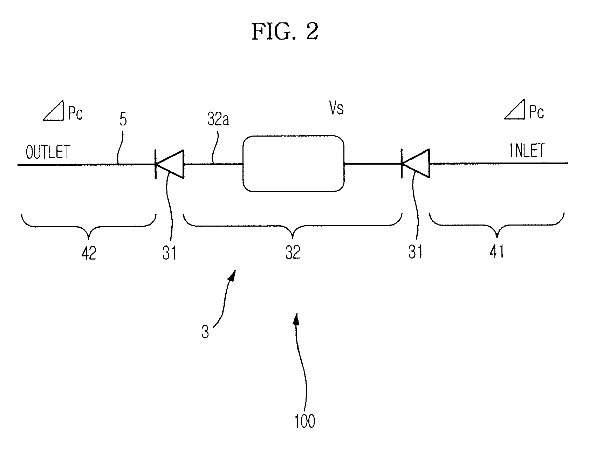

Hereinafter, a fluid circuit 100 will be described in detail. A refrigerant, which is a compressible fluid, and a lubricant, which is an incompressible fluid, flow along the fluid circuit 100 in a mixed state. As shown in FIG. 2, the fluid circuit 100 includes an upstream side space 41 and a downstream side space 42 in which internal pressures repeatedly alternate between high pressure and low pressure and a pump unit 3 having an inlet connected to the upstream side space 41 and an outlet connected to the downstream side space 42. The pump unit 3 has two check valves 31 arranged in series in a direction in which fluid movement is allowed from the upstream side space 41 to the downstream side space 42. A middle part 32 having a predetermined capacity is formed between the check valves 31. The middle part 32 is provided at the bottom thereof with a fluid outlet hole, through which a lubricant is easily discharged according to expansion of a refrigerant. The pressure of the upstream side space 41 may be, for example, internal pressure of the lubricant storage part 15 connected to the upstream side space 41, and the pressure of the downstream side space 42 may be, for example, pressure of the suction pipe 12. Also, the internal pressures of the upstream side space 41 and the downstream side space 42 are changed in correspondence to change in the discharge capacity of the variable capacity type compressor 1.

The operation of the fluid circuit 100 and setting of the capacity of the middle part 32 will be described.

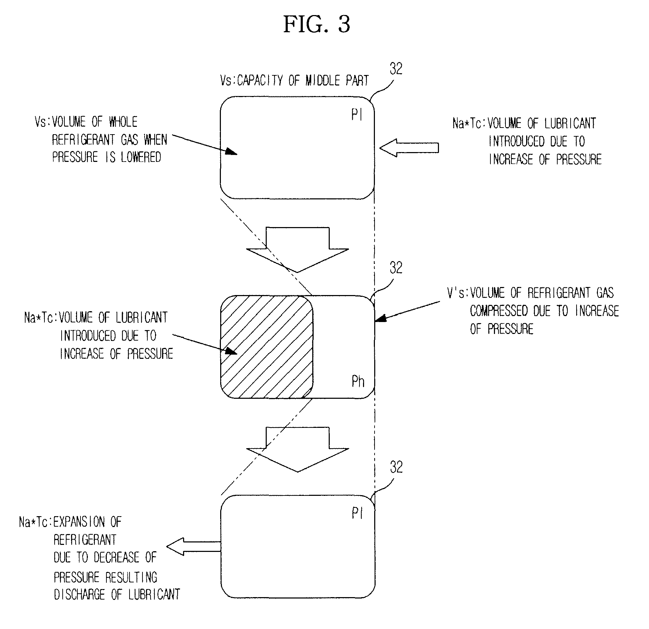

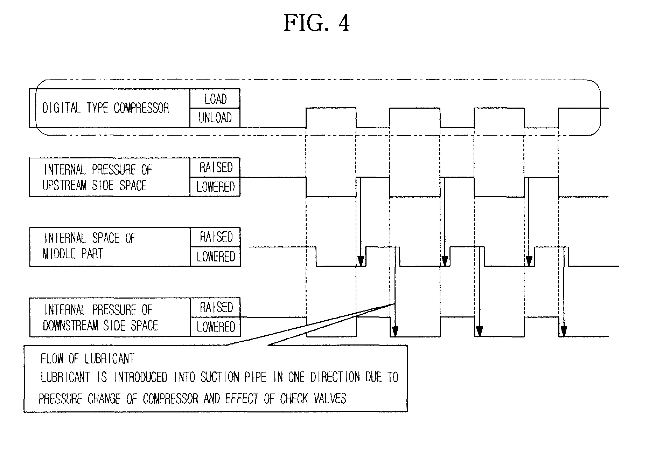

FIG. 3 is a view illustrating the operation of the fluid circuit 100 in a case in which the variable capacity type compressor 1 repeatedly alternates between a load operation and an unload operation, and therefore, internal pressures of the upstream side space 41 and the downstream side space 42 repeatedly alternate between high pressure and low pressure. FIG. 4 is a timing chart illustrating switching between the load operation and the unload operation of the compressor 1 and a pressure change in the upstream side space 41, the middle part 32, and the downstream side space 42. When the variable capacity type compressor 1 repeatedly performs the load operation and the unload operation, a pressure difference ΔPc occurs at the upstream side space 41 and the downstream side space 42 as shown in FIG. 4. When the low-pressure shell type compressor performs a load operation, the internal pressures of the upstream side space 41 and the downstream side space 42 are lowered, and, when the low-pressure shell type compressor performs an unload operation, the internal pressures of the upstream side space 41 and the downstream side space 42 are raised, which will be described in detail. When the load operation is performed, a suctioning action is performed in the cylinder of the compressor 1, with the result that a fluid, such as a lubricant and steam, in the lubricant storage part 15 is suctioned into the cylinder, whereby the internal pressures of the upstream side space 41 and the downstream side space 42 are lowered. On the other hand, when the unload operation is performed, the lubricant storage part 15 idles at high pressure, with the result that the internal pressures of the upstream side space 41 and the downstream side space 42 rise to a high pressure. In this way, the internal pressures of the upstream side space 41 and the downstream side space 42 are changed in inverse proportion to the change of discharge capacity. Also, when the load operation and the unload operation are repeatedly performed, a shorter delay of pressure occurs in the middle part 32 than in the upstream side space 41 and the downstream side space 42 due to effects of the check valves 31, with the result that the pressure of the middle part 32 repeatedly alternates between high pressure Ph and low pressure Pl.

When the pressure of the middle part 32 is low pressure PI, as shown in the upper part of FIG. 3, a refrigerant gas expands in the middle part 32, with the result that the middle part 32 is filled with the refrigerant gas (all of the capacity Vs). When the compressor 1 performs the unload operation, the pressure of the lubricant storage part 15 of each compressor 1 is raised, with the result that the pressure of the upstream side space 41 connected to the lubricant storage part 15 is also raised. Since the upstream side space 41 and the middle part 32 have slightly different pressure change cycles, as shown in FIG. 4, the pressure of the upstream side space 41 becomes higher than the pressure of the middle part 32, with the result that the lubricant is introduced into the middle part 32. When the lubricant is introduced into the middle part 32, as shown in the middle part of FIG. 3, the refrigerant gas in the middle part 32 is compressed, with the result that the pressure of the middle part 32 is raised. The lubricant is continuously introduced into the middle part 32 until the pressure of the upstream side space 41 and the pressure of the middle part 32 reach high pressure Ph. Subsequently, the middle part 32 and the downstream side space 42 temporarily have the same high pressure Ph. However, the pressure of the downstream side space 42 is first lowered to low pressure PI, with the result that the lubricant flows from the middle part 32 to the downstream side space 42 as shown in the lower part of FIG. 3. At this time, the pressure of the upstream side space 41 is lower than that of the middle part 32. However, the lubricant flows only to the downstream side space 42 due to the check valves 31.

The pressures of the upstream side space 41 and the downstream side space 42 repeatedly alternate between high pressure and low pressure according to the change as described above, and therefore, the lubricant flows from the upstream side space 41 to the middle part 32 and from the middle part 32 to the downstream side space 42.

Hereinafter, the capacity of the middle part 32 will be described based on a relationship between the amount of a lubricant conveyed and the volume change of a refrigerant gas when pressure change occurs during one cycle.

The volume of the refrigerant gas shown in the upper and middle parts of FIG. 4 may be represented by the following equality (Equation 2) assuming that the mass of the refrigerant gas in the middle part 32 in the respective states are the same

$$V_s \times \rho_l = V_S' \times \rho_h$$

Where, Vs is the capacity of the middle part 32 (the volume of the refrigerant gas when the middle part 32 is completely filled with the refrigerant gas), Vs' is the volume of the refrigerant gas when the refrigerant gas is maximally compressed by the lubricant introduced into the middle part 32, $\rho l$ is the density of the refrigerant gas at low pressure PI, and ph is the density of the refrigerant gas at high pressure Ph.

Also, as shown in FIG. 4, the volume change of the refrigerant gas corresponds to the introduction volume Va' of the lubricant in one cycle of pressure change. Therefore, the following equality (Equation 3) is formed assuming that the volume flow rate of the lubricant in one cycle of pressure change is Na.

[Equation 3]

$$V_a' = N_a \times T_c = V_s - V_s'$$

Where Tc is a cycle in which change between high pressure and low pressure occurs.

The following equality (Equation 4) is formed through combination of the equality (Equation 2) and the equality (Equation 3).

[Equation 4]

$$V_a' = N_a \times T_c = V_s \times (1 - \rho_l / \rho_h)$$

Therefore, the capacity Vs of the middle part 32 is represented by the following inequality (Equation 5) in consideration of the fact that, at minimum, the density change (volume change) of the refrigerant gas is utilized as pump

performance.

**[Equation 5]**

$$V_s \geq (N_a \times T_c)/(1 - \rho_l/\rho_h)$$

Next, the capacity Vs of the middle part 32 will be described in consideration of the pressure loss in the pipe. When the compressor 1 repeatedly performs the load operation and the unload operation, movement of the lubricant is continued until the pressure of the upstream side space 41, i.e., high pressure Ph, and the pressure of the middle part 32, i.e., low pressure Pl, become equal and thus the pressure difference $\Delta$Pc becomes zero, as seen from the timing chart of FIG. 4. Assuming that the pressure difference between the upstream side space 41 and the middle part 32 at a certain point of time is p, the volume flow rate Na of the lubricant may be represented by the following equality (Equation 6).

**[Equation 6]**

$$N_a = C \times \sqrt{p}$$

Where, C is an integer calculated based upon the length of the pipe, diameter of the pipe, the coefficient of friction of the pipe, etc.

Therefore, the volume Va" of the lubricant introduced from the upstream side space 41 to the middle part 32 until the pressure difference $\Delta$Pc becomes zero may be represented by the following equality (Equation 7).

**[Equation 7]**

$$V_a'' = \int_0^{Th} C_h \times \sqrt{p}\, dp$$

Where, Th is time during which pressure is high (time during which the compressor 1 performs the unload operation), and Ch is an integer when the lubricant flows from the upstream side space 41 to the middle part 32.

In the same manner, the amount of the lubricant discharged from the middle part 32 to the downstream side space 42 may be represented by the following equality (Equation 8).

**[Equation 8]**

$$V_a''' = \int_0^{Tl} C_l \times \sqrt{p}\, dp$$

Where, Tl is time during which pressure is low (time during which the compressor 1 performs the load operation), and Cl is an integer when the lubricant flows from the middle part 32 to the downstream side space 42.

Assuming that the volume of the lubricant introduced into the middle part 32 is equal to the volume of the lubricant discharged from the middle part 32, the following equality (Equation 9) is formed through combination of the equality (Equation 4), the equality (Equation 7), and the equality (Equation 8).

[Equation 9]

$$V_a''' = V_s \times (1 - \rho_l / \rho_h) = \int_0^{Tl} C_l \times \sqrt{p}\, dp$$

When the capacity Vs of the middle part 32 is changed, the following equality (Equation 10) is formed.

[Equation 10]

$$V_s = (\int_0^{Tl} C_l \times \sqrt{p}\, dp) / (1 - \rho_l / \rho_h)$$

Since it may not be necessary for the capacity Vs of the middle part 32 to be greater than the volume of the lubricant decided by the pressure difference, the capacity Vs of the middle part 32 is represented by the following inequality (Equation 11) formed through combination of the equality (Equation 5) and the equality (Equation 10).

[Equation 11]

$$\begin{cases} V_s \geq (N_a \times T_c) / (1 - \rho_l / \rho_h) \\ V_s \leq (\int_0^{Tl} C_l \times \sqrt{p}\, dp) / (1 - \rho_l / \rho_h) \end{cases}$$

Meanwhile, pressures Pl and Ph of the refrigerant gas when the densities of the refrigerant gas are ρl and ρh may be expressed using a coefficient g(x), and the pressure difference ΔPc may be represented by the following equality (Equation 12).

[Equation 12]

$$\Delta Pc = \left| P_h - P_l \right| = \left| g(\rho_h) - g(\rho_l) \right|$$

According to the fluid circuit 100 and the refrigeration cycle apparatus 200 using the same, the refrigeration cycle apparatus 200 is configured such that the lubricant storage parts 15 of the respective compressors 1 are connected in series via the uniform lubricant distribution pipes 5, and therefore, the lubricant is circulated through the lubricant separator 61, the start compressor 1 a, the middle compressor 1 b, and the end compressor 1 c in order, thereby uniformly maintaining fluid surfaces of the respective compressors 1. Also, the lubricant is conveyed through the fluid circuit 11 by pressure change generated when the variable capacity type compressor 1 alternately repeats the load operation and the unload operation. For the low-pressure shell type compressor 1, therefore, it may be difficult to convey the lubricant from the lubricant storage part 15 to a pipe having higher pressure, but the lubricant may be conveyed actively through the pumping action of the fluid circuit 100. In addition, when pressure change is generated by a certain variable capacity type compressor 1, the lubricant in the compressors which are stopped is also conveyed, thereby eliminating the conventional uniform lubricant distribution in which pressure difference occurs, and thus preventing lowering of performance as the refrigeration cycle caused by performing the uniform lubricant distribution differently from a general air conditioning operation.

Hereinafter, a fluid circuit 100' and a refrigeration cycle apparatus 200' using the same according to another embodiment will be described. This embodiment is different from the previous embodiment in that the direction in which uniform lubricant distribution pipes 5 are mounted is changed, the construction to perform uniform lubricant distribution through a lubricant separator 61 is omitted, and uniform lubricant distribution is performed mainly using lubricant storage parts 15 of compressors 1.

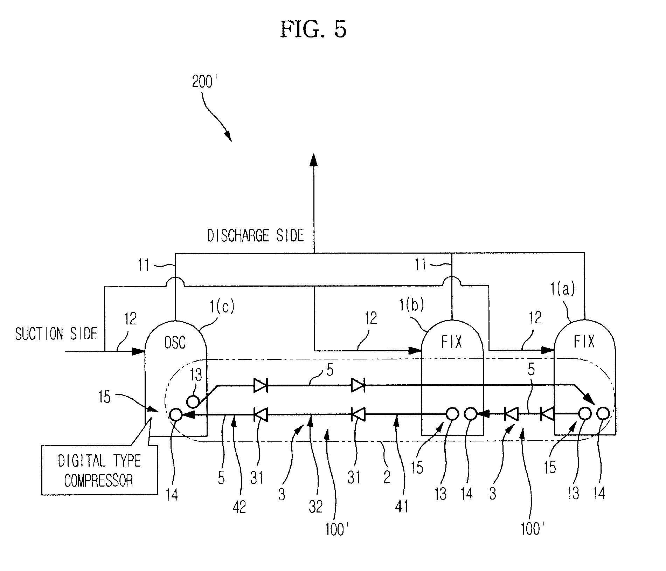

More specifically, as shown in FIG. 5, lubricant storage parts 15 of compressors 1 are connected to each other via uniform lubricant distribution pipes 5 such that the compressors 1 form a circular ring. Also, fluid circuits 100 mounted between the respective compressors 1 are arranged in line to convey surplus lubricant in order of the start compressor 1a, the middle compressor 1 b, the end compressor 1 c, and the start compressor 1 a.

In the refrigeration cycle apparatus of this embodiment, the lubricant in the compressors 1 which are stopped is conveyed by pressure change generated when the digital type compressor 1 repeatedly performs a load operation and an unload operation, in the same manner as in the previous embodiment. Therefore, uniform lubricant distribution between the respective compressors 1 is achieved without performing an additional uniform lubricant distribution operation, thereby preventing lowering of refrigeration performance of the system caused by performing the uniform lubricant distribution operation.

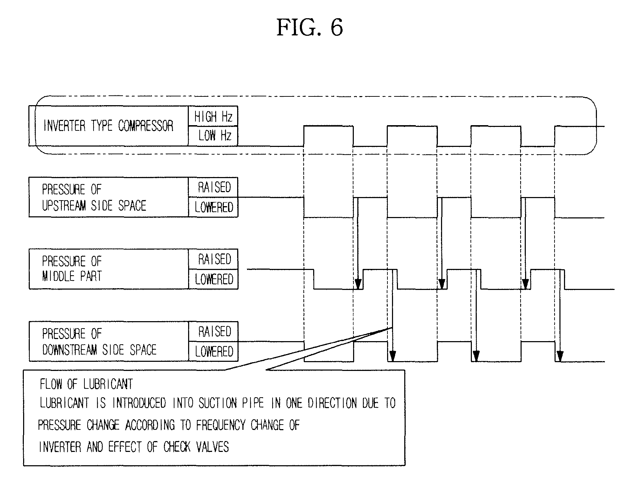

In the above two embodiments, the digital type compressor is used as the variable capacity type compressor 1, pressure change is generated by repetition of the load operation and the unload operation, and the lubricant is conveyed by the pressure change, thereby achieving uniform lubricant distribution. As the variable capacity type compressor 1, an inverter type compressor 1 may be used instead of the digital type compressor. When the inverter type compressor 1 is used, a frequency of the inverter is alternately repeatedly raised and lowered to generate pressure change, and the lubricant is conveyed through the fluid circuit 100, as shown in the timing chart of FIG. 6. When the inverter type compressor 1 is operated as described above, uniform lubricant distribution is achieved in the same manner as in the digital type compressor 1.

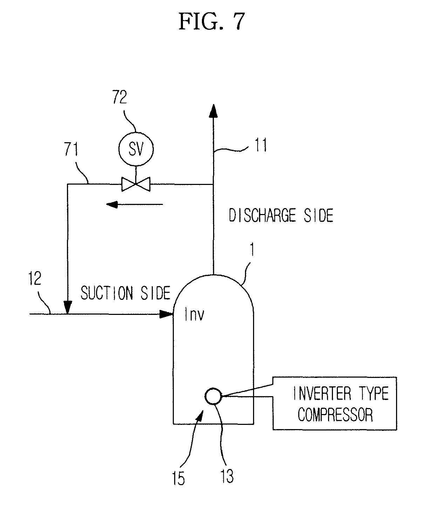

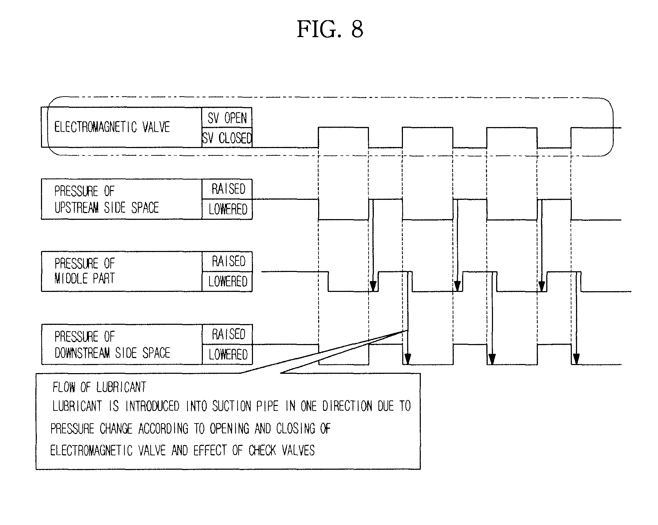

Also, to generate pressure change in the inverter type compressor 1, as shown in FIG. 7, for example, a bypass pipe 71 may be connected between a discharge pipe 11 and a suction pipe 12 of the inverter type compressor 1, and an opening and closing valve, such as an electromagnetic valve 72, may be mounted on the bypass pipe 71. In this construction, as shown in the timing chart of FIG. 8, the electromagnetic valve 72 is opened to bypass refrigerant gas from the discharge pipe 11 to the suction pipe 12 such that the compressor 1 idles, thereby performing a pseudo-unload operation. Therefore, the load operation and the unload operation may be repeatedly performed in the same manner as the digital type compressor 1. In summary, pressure change is repeatedly generated, and therefore, the lubricant is conveyed through the fluid circuit 100, thereby achieving uniform lubricant distribution.

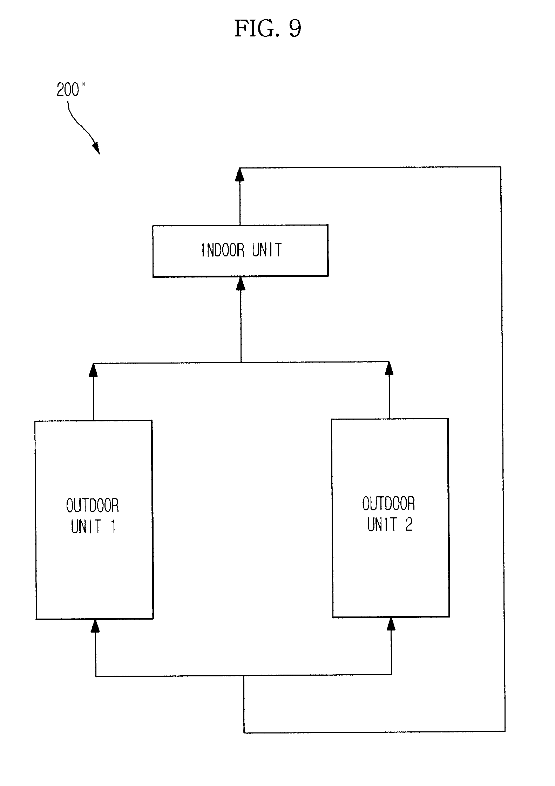

Hereinafter, a fluid circuit 100 and a refrigeration cycle apparatus 200" using the same according to another embodiment will be described. This embodiment is configured such that a compressor is mounted to a fluid circuit 100 in a conventional air conditional apparatus shown in FIG. 9 to discharge a surplus lubricant to a discharge side. In summary, the discharged lubricant passes through an indoor unit and returns to outdoor units to perform uniform lubricant distribution between compressors 1 of the respective outdoor units.

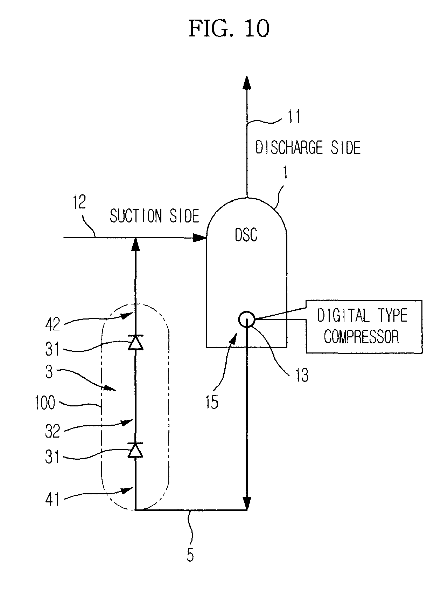

More specifically, as shown in FIG. 10, in a conventional variable capacity low-pressure shell type compressor 1 mounted in a corresponding one of the outdoor units, a uniform lubricant distribution pipe 5 is mounted such that the upstream side of a fluid circuit 100 is connected to a lubricant outlet port 13 mounted at a standard flow rate position of the compressor 1, and the downstream side of the fluid circuit 100 is connected to a suction pipe 12 extending to the compressor 1. In this construction, when a load operation and an unload operation are repeatedly performed to generate pressure change, surplus lubricant exceeding a standard flow rate is conveyed to the suction pipe 12 by the fluid circuit 100. The lubricant conveyed to the suction pipe 12 is introduced into a cylinder of the compressor 1 together with refrigerant gas and is then discharged through the discharge pipe 11 of the compressor 1.

In summary, it may be necessary to provide the compressor 1 with an additional mechanism to discharge the surplus lubricant from the conventional compressor 1. In this embodiment, on the other hand, the uniform lubricant distribution pipe 5 is connected between the lubricant outlet port 13 and the suction pipe 12, and two check valves 31 are mounted in series on the uniform lubricant distribution pipe 5 to allow a fluid to flow only to the suction pipe 12, whereby the surplus lubricant is discharged through the discharge pipe 11. The lubricant discharged through the discharge pipe 11 passes through the indoor unit and is distributed into the compressors 1 of the respective outdoor units, thereby achieving uniform lubricant distribution. Meanwhile, when the position of a suction port where the suction pipe 12 is connected to the compressor 1 is set to be close to the cylinder in the compressor 1, a discharge ratio of the lubricant may be increased.

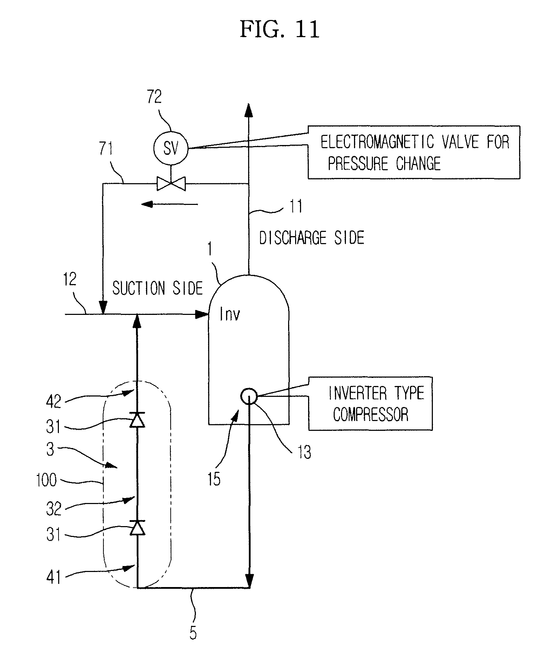

In this embodiment, the digital type compressor is used as the variable capacity type compressor 1. Alternatively, an inverter type compressor may be used as the variable capacity type compressor 1. In this case, as shown in FIG. 11, the uniform lubricant distribution pipe 5 may be connected between the lubricant outlet port 13 and the suction pipe 12, and the fluid circuit 100 may be mounted such that the lubricant flows to the suction pipe 12. In addition, as previously described, a bypass pipe 71 may be connected between the discharge pipe 11 and the suction pipe 12, and an electromagnetic valve 72 may be mounted on the bypass pipe 71. When the inverter type compressor 1 is configured to generate pressure change as described above, low-pressure lubricant is discharged to the discharge pipe 11 through the fluid circuit 100, thereby achieving uniform lubricant distribution. Also, the drive frequency of the inverter type compressor 1 may be repeatedly raised and lowered to generate pressure change.

Hereinafter, a fluid circuit 100 and a refrigeration cycle apparatus 200"' using the same according to a further embodiment will be described. The embodiment of FIG. 10 proposes a low-pressure shell type compressor 1 with a surplus lubricant discharging function. On the other hand, this embodiment proposes a high-pressure shell type compressor 1.

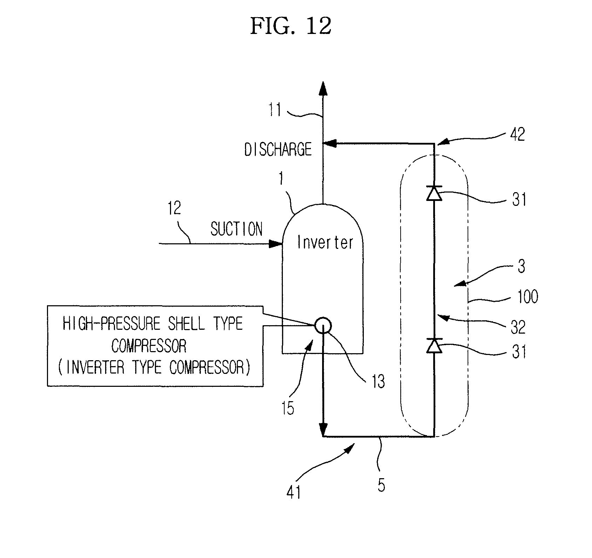

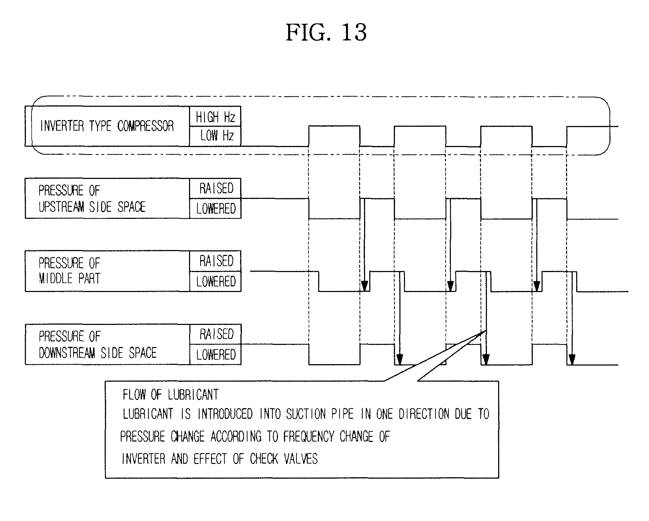

As shown in FIG. 12, the high-pressure shell type compressor 1 may be configured such that a uniform lubricant distribution pipe 5 is connected between a lubricant outlet port 13 to discharge a surplus lubricant and a discharge pipe 11, and two check valves 31 are mounted in series on the uniform lubricant distribution pipe 5 to allow a fluid to flow only to the suction pipe 12 such that a fluid flows to the discharge pipe 11, thereby forming a fluid circuit 100. In this case, for example, when the high-pressure shell type compressor 1 is an inverter type compressor, the drive frequency of the compressor is repeatedly raised and lowered to generate pressure change, with the result that the surplus lubricant is discharged to the discharge pipe 11, as shown in the timing chart of FIG. 13. In summary, the lubricant is discharged to the indoor unit and is then distributed to the respective outdoor units, thereby achieving uniform lubricant distribution. Meanwhile, when the high-pressure shell type compressor 1 is used, the lubricant is conveyed in the same manner even though phases of pressure change at the upstream side space 41 and the downstream side space 42 and pressure change generated by the compressor 1 are opposite to those of the low-pressure shell type compressor 1.

Other embodiments will be described. The fluid circuit and the refrigeration cycle apparatus are not limited to an air conditioning apparatus. For example, embodiments may be applied to refrigeration equipment, such as a refrigerator. Also, pressure change may be periodically generated based on the construction and operation of the compressor so as to convey the lubricant through the fluid circuit.

Also, it is not necessary that the fluid circuit be applied only to the refrigeration cycle apparatus. The fluid circuit may be used to convey an incompressible fluid in an apparatus in which a compressible fluid and the incompressible fluid flow in a mixed state in addition to the refrigeration cycle apparatus.

As is apparent from the above description, the two check valves are mounted in series on the pipe as the pump unit, and the middle part having a predetermined capacity is formed between the check valves. When the pressure of the upstream side space and the pressure of the downstream side space repeatedly alternate between high pressure and low pressure, therefore, the lubricant, which is an incompressible fluid, is conveyed by the pumping action of the pump unit. Consequently, an additional uniform lubricant distribution operation is eliminated to prevent a reduction in refrigeration efficiency, with the result that the refrigeration cycle apparatus is operated at higher efficiency.

Although a few embodiments have been shown and described, it would be appreciated by those skilled in the art that changes may be made in these embodiments without departing from the principles and spirit of the invention, the scope of which is defined in the claims and their equivalents.

## Claims

1.    A fluid circuit in which a compressible fluid and an incompressible fluid flow in a mixed state, the fluid circuit comprising:

an upstream side space and a downstream side space in which internal pressures repeatedly alternate between high pressure and low pressure; and
a pump unit having an inlet connected to the upstream side space and an outlet connected to the downstream side space, the pump unit including two check valves arranged in series in a direction in which fluid movement is allowed from the upstream side space to the downstream side space, and a middle part, having a predetermined capacity, formed between the check valves.

2.    The fluid circuit according to claim 1, wherein the middle part has a capacity (Vs) set to be within a range as represented by the following inequality.

$$\begin{cases} V_s \geq (N_a \times T_c)/(1 - \rho_l / \rho_h) \\ V_s \leq (\int_0^{T_l} C_l \times \sqrt{p}\,dp)/(1 - \rho_l / \rho_h) \end{cases}$$

where, ph is a density of the compressible fluid at high pressure, ρl is a density of the compressible fluid at low pressure, Tc is a cycle in which change between high pressure and low pressure occurs, Na is a volume flow rate of the incompressible fluid, p is pressure loss, Cl is an integer, Tl is time until pressure of the pump unit equals to pressure of the upstream side space.

3.    The fluid circuit according to claim 1, wherein the middle part of the pump unit is provided at a bottom thereof with a fluid outlet hole.

4. A refrigeration cycle apparatus, comprising:

a plurality of compressors; and
a uniform lubricant distribution mechanism to perform uniform lubricant distribution between the respective compressors, the uniform lubricant distribution mechanism having at least one fluid circuit including an upstream side space and a downstream side space in which internal pressures repeatedly alternate between high pressure and low pressure, and a pump unit having an inlet connected to the upstream side space and an outlet connected to the downstream side space, the pump unit including two check valves arranged in series in a direction in which fluid movement is allowed from the upstream side space to the downstream side space, and a middle part, having a predetermined capacity, formed between the check valves.

5. The refrigeration cycle apparatus according to claim 4, wherein
the uniform lubricant distribution mechanism has a uniform lubricant distribution pipe to interconnect lubricant storage parts of the respective compressors to store a lubricant, the at least one fluid circuit being formed at the uniform lubricant distribution pipe, and at least one of the compressors comprises a variable capacity type compressor in which internal pressures of the upstream side space and the downstream side space are changed between high pressure and low pressure based on a change in a discharge capacity of the compressor.

6. The refrigeration cycle apparatus according to claim 4, wherein
the compressors are variable capacity low-pressure shell type compressors,
the uniform lubricant distribution mechanism has a uniform lubricant distribution pipe connected between each of the lubricant storage parts of the compressors and each of suction pipes connected to the compressors to suction a lubricant, and
the at least one fluid circuit is mounted on the uniform lubricant distribution pipe.

7. The refrigeration cycle apparatus according to claim 6, wherein an upstream side of the fluid circuit is connected to a lubricant outlet port of the compressor, and a downstream side of the fluid circuit is connected to the suction pipe extending to the compressor.

8. The refrigeration cycle apparatus according to claim 4, wherein
the compressors are variable capacity high-pressure shell type compressors,
the uniform lubricant distribution mechanism has a uniform lubricant distribution pipe connected between each of the lubricant storage parts of the compressors and each of discharge pipes connected to the compressors to discharge a lubricant, and
the at least one fluid circuit is mounted on the uniform lubricant distribution pipe.

9. The refrigeration cycle apparatus according to claim 8, wherein an upstream side of the fluid circuit is connected to a lubricant output port of the compressor, and a downstream side of the fluid circuit is connected to the discharge pipe extending from the compressor.

10. The refrigeration cycle apparatus according to claim 4, wherein
at least one of the plurality of compressors is an inverter type compressor, and
the uniform lubricant distribution mechanism has a discharge pipe connected to the inverter type compressor to discharge a lubricant, a suction pipe to suction the lubricant, a bypass pipe connected between the discharge pipe and the suction pipe, and a valve mounted on the bypass pipe to allow refrigerant gas from the discharge pipe to be bypassed to the suction pipe to perform a pseudo-unload operation.

11. The refrigeration cycle apparatus according to claim 4, further comprising discharge pipes to discharge a lubricant from the plurality of compressors, a lubricant separator connected to the discharge pipes to separate a lubricant from a refrigerant discharged from the plurality of compressors, and a lubricant return pipe mounted between the lubricant separator and a suction pipe to suction lubricant of one of the compressors to return the lubricant to the one of the compressors.

12. The refrigeration cycle apparatus according to claim 4, wherein
each of the plurality of compressors includes a lubricant storage part,
the uniform lubricant distribution mechanism has a plurality of uniform lubricant distribution pipes connecting each of the lubricant storage parts of the compressors to each other such that the compressors form a circular ring, and fluid circuits are mounted between respective compressors to convey surplus lubricant between the compressors.

# FIG. 1

FIG. 2

# FIG. 3

Vs:CAPACITY OF MIDDLE PART

Vs:VOLUME OF WHOLE
REFRIGERANT GAS WHEN
PRESSURE IS LOWERED

Na*Tc:VOLUME OF LUBRICANT
INTRODUCED DUE TO
INCREASE OF PRESSURE

Pl

32

Na*Tc:VOLUME OF LUBRICANT
INTRODUCED DUE TO
INCREASE OF PRESSURE

V's:VOLUME OF REFRIGERANT GAS
COMPRESSED DUE TO INCREASE
OF PRESSURE

Ph

32

Na*Tc:EXPANSION OF
REFRIGERANT
DUE TO DECREASE OF
PRESSURE RESULTING
DISCHARGE OF LUBRICANT

Pl

32

## FIG. 4

| DIGITAL TYPE COMPRESSOR | LOAD |
| | UNLOAD |

| INTERNAL PRESSURE OF UPSTREAM SIDE SPACE | RAISED |
| | LOWERED |

| INTERNAL SPACE OF MIDDLE PART | RAISED |
| | LOWERED |

| INTERNAL PRESSURE OF DOWNSTREAM SIDE SPACE | RAISED |
| | LOWERED |

FLOW OF LUBRICANT
LUBRICANT IS INTRODUCED INTO SUCTION PIPE IN ONE DIRECTION DUE TO PRESSURE CHANGE OF COMPRESSOR AND EFFECT OF CHECK VALVES

FIG. 5

FIG. 6

| INVERTER TYPE COMPRESSOR | HIGH Hz |
| | LOW Hz |

| PRESSURE OF UPSTREAM SIDE SPACE | RAISED |
| | LOWERED |

| PRESSURE OF MIDDLE PART | RAISED |
| | LOWERED |

| PRESSURE OF DOWNSTREAM SIDE SPACE | RAISED |
| | LOWERED |

FLOW OF LUBRICANT
LUBRICANT IS INTRODUCED INTO SUCTION PIPE IN ONE DIRECTION DUE TO
PRESSURE CHANGE ACCORDING TO FREQUENCY CHANGE OF
INVERTER AND EFFECT OF CHECK VALVES

FIG. 7

DISCHARGE SIDE

SUCTION SIDE

Inv

INVERTER TYPE COMPRESSOR

FIG. 8

| ELECTROMAGNETIC VALVE | SV OPEN |
| | SV CLOSED |

| PRESSURE OF UPSTREAM SIDE SPACE | RAISED |
| | LOWERED |

| PRESSURE OF MIDDLE PART | RAISED |
| | LOWERED |

| PRESSURE OF DOWNSTREAM SIDE SPACE | RAISED |
| | LOWERED |

FLOW OF LUBRICANT
LUBRICANT IS INTRODUCED INTO SUCTION PIPE IN ONE DIRECTION DUE TO
PRESSURE CHANGE ACCORDING TO OPENING AND CLOSING OF
ELECTROMAGNETIC VALVE AND EFFECT OF CHECK VALVES

FIG. 9

200"

INDOOR UNIT

OUTDOOR
UNIT 1

OUTDOOR
UNIT 2

FIG. 10

FIG. 11

FIG. 12

FIG. 13

| INVERTER TYPE COMPRESSOR | HIGH Hz |
| | LOW Hz |

| PRESSURE OF UPSTREAM SIDE SPACE | RAISED |
| | LOWERED |

| PRESSURE OF MIDDLE PART | RAISED |
| | LOWERED |

| PRESSURE OF DOWNSTREAM SIDE SPACE | RAISED |
| | LOWERED |

FLOW OF LUBRICANT
LUBRICANT IS INTRODUCED INTO SUCTION PIPE IN ONE DIRECTION DUE TO
PRESSURE CHANGE ACCORDING TO FREQUENCY CHANGE OF
INVERTER AND EFFECT OF CHECK VALVES

Europäisches
Patentamt

European
Patent Office

Office européen
des brevets

# EUROPEAN SEARCH REPORT

Application Number

EP 10 19 3399

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 159 260 A (MITSUBISHI ELECTRIC CORP) 27 November 1985 (1985-11-27) * page 2, line 15 - line 106; figure 2 * | 1-3 | INV. F25B31/00 F25B41/04 F25B1/00 F25B5/02 |
| X | EP 0 403 239 A2 (HITACHI LTD [JP]) 19 December 1990 (1990-12-19) * column 2, line 44 - column 6, line 19; figure 1 * | 1-7,11, 12 | |
| Y | | 10 | |
| X | US 2006/266074 A1 (GROLL ECKHARD A [US] ET AL) 30 November 2006 (2006-11-30) * paragraphs [0012], [0031]; figure 1 * | 1-9,11 | |
| X | US 2003/066302 A1 (UENO KIYOTAKA [JP]) 10 April 2003 (2003-04-10) * paragraph [0040] - paragraphs [0048], [0054]; figures 1,2 * | 1-12 | |
| Y | WO 2009/091400 A1 (CARRIER CORP [US]; CHEN YU H [US]; DURAISAMY SURESH [US]; LIU LUCY YI) 23 July 2009 (2009-07-23) * paragraph [0019]; figure 1 * | 10 | |
| A | KR 2009 0068136 A (SAMSUNG ELECTRONICS CO LTD [KR]) 25 June 2009 (2009-06-25) * paragraph [0019] * | 5,8,9 | TECHNICAL FIELDS SEARCHED (IPC) F25B |

-/--

The present search report has been drawn up for all claims

| Place of search | Date of completion of the search | Examiner |
|---|---|---|
| Munich | 27 April 2011 | Gasper, Ralf |

EPO FORM 1503 03.82 (P04C01)

**Europäisches Patentamt**
**European Patent Office**
**Office européen des brevets**

# EUROPEAN SEARCH REPORT

Application Number

EP 10 19 3399

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PARK Y C ET AL: "Thermodynamic analysis on the performance of a variable speed scroll compressor with refrigerant injection", INTERNATIONAL JOURNAL OF REFRIGERATION, ELSEVIER, PARIS, FR, vol. 25, no. 8, 1 December 2002 (2002-12-01), pages 1072-1082, XP004388589, ISSN: 0140-7007, DOI: DOI:10.1016/S0140-7007(02)00007-5 * abstract * ----- | 5-7 | |
| A | EP 1 536 190 A1 (BIRTON AS [DK]) 1 June 2005 (2005-06-01) * the whole document * ----- | 1-12 | |
| A | US 2003/010047 A1 (SHIMODA JUNICHI [JP]) 16 January 2003 (2003-01-16) * paragraphs [0003], [0058] - paragraph [0063]; figure 1 * ----- | 10 | |
| | | | TECHNICAL FIELDS SEARCHED (IPC) |

The present search report has been drawn up for all claims

| Place of search | Date of completion of the search | Examiner |
|---|---|---|
| Munich | 27 April 2011 | Gasper, Ralf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 19 3399

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2011

| Patent document cited in search report | | Publication date | Patent family member(s) | | | Publication date |
|---|---|---|---|---|---|---|
| GB 2159260 | A | 27-11-1985 | AU | 557290 | B2 | 18-12-1986 |
| | | | AU | 4257485 | A | 21-11-1985 |
| | | | JP | 1726645 | C | 19-01-1993 |
| | | | JP | 4009982 | B | 21-02-1992 |
| | | | JP | 60245960 | A | 05-12-1985 |
| | | | KR | 890006727 | Y1 | 30-09-1989 |
| | | | US | 4586351 | A | 06-05-1986 |
| EP 0403239 | A2 | 19-12-1990 | ES | 2058800 | T3 | 01-11-1994 |
| | | | JP | 2865707 | B2 | 08-03-1999 |
| | | | JP | 3017469 | A | 25-01-1991 |
| | | | US | 5094598 | A | 10-03-1992 |
| US 2006266074 | A1 | 30-11-2006 | NONE | | | |
| US 2003066302 | A1 | 10-04-2003 | AU | 2706301 | A | 31-07-2001 |
| | | | BR | 0104148 | A | 11-06-2002 |
| | | | CN | 1363026 | A | 07-08-2002 |
| | | | EP | 1166019 | A1 | 02-01-2002 |
| | | | ES | 2228796 | T3 | 16-04-2005 |
| | | | WO | 0153757 | A1 | 26-07-2001 |
| WO 2009091400 | A1 | 23-07-2009 | CN | 101970953 | A | 09-02-2011 |
| | | | EP | 2229562 | A1 | 22-09-2010 |
| KR 20090068136 | A | 25-06-2009 | CN | 101469910 | A | 01-07-2009 |
| | | | JP | 2009150628 | A | 09-07-2009 |
| EP 1536190 | A1 | 01-06-2005 | NONE | | | |
| US 2003010047 | A1 | 16-01-2003 | AU | 763182 | B2 | 17-07-2003 |
| | | | AU | 1276702 | A | 21-05-2002 |
| | | | CN | 1395670 | A | 05-02-2003 |
| | | | DE | 60119765 | T2 | 12-10-2006 |
| | | | EP | 1335167 | A1 | 13-08-2003 |
| | | | ES | 2262688 | T3 | 01-12-2006 |
| | | | WO | 0239025 | A1 | 16-05-2002 |
| | | | JP | 4032634 | B2 | 16-01-2008 |
| | | | JP | 2002147823 | A | 22-05-2002 |

EPO FORM P0459

For more details about this annex : see Official Journal of the European Patent Office, No. 12/82

**EP 2 333 458 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006046783 A